# EUROPÄISCHE PATENTSCHRIFT

(11) **EP 4 156 466 B1**
(45) Veröffentlichungstag und Bekanntmachung des Hinweises auf die Patenterteilung: **29.07.2026**
(21) Anmeldenummer: 22193859.0
(22) Anmeldetag: 05.09.2022
(51) Int. Cl.: H02K 1/2791

(54) **MAGNETELEMENTHALTEVORRICHTUNG**
MAGNETIC ELEMENT HOLDING DEVICE
DISPOSITIF DE MAINTIEN D'ÉLÉMENT MAGNÉTIQUE

(30) Priorität: 27.09.2021 DE 102021124844
(43) Veröffentlichungstag der Anmeldung: 29.03.2023
(73) Patentinhaber: ebm-papst Mulfingen GmbH & Co. KG, 74673 Mulfingen (DE)
(72) Erfinder: BAUN, Martin, 74673 Mulfingen (DE); RITTMAIER, Jochen, 74626 Bretzfeld (DE)
(74) Vertreter: Staeger & Sperling Partnerschaftsgesellschaft mbB

(56) Entgegenhaltungen:
- EP-A1- 3 567 701
- CA-A1- 2 950 308
- DE-A1- 102018 109 993
- KR-A- 20180 089 204
- US-A- 4 012 651
- US-A1- 2015 048 620
- US-A1- 2021 075 278

## Beschreibung

Die Erfindung betrifft eine Magnetelementhaltevorrichtung für einen um eine Rotationsachse rotierbaren Rotor eines Elektromotors mit wenigstens einem Magnetträger, welcher mindestens einen Aufnahmeabschnitt zur Aufnahme mindestens eines Magnetelements aufweist, und wenigstens einem Halteelement zum positionsfesten Halten des mindestens einen Magnetelements innerhalb des mindestens einen Aufnahmeabschnitts.

Elektromotoren, beispielsweise für den Antrieb eines Ventilators, werden häufig in Außenläuferbauweise ausgeführt. Für kostengünstige Lösungen werden im Rotor großvolumige Ferrit-basierte Magnete eingesetzt. Für Anwendungen, bei denen die Drehmomentdichte des Motors erhöht werden muss, können die Magnete durch hochremanente Magnete ersetzt werden.

Durch deren hohe Energiedichte sind kleinere Magnetvolumen sinnvoll. Dabei müssen jedoch die kleineren Magnete in einem zu großen Bauraum untergebracht werden, ohne dass der Luftspalt zwischen Magnet und Stator größer wird.

Eine Möglichkeit hierfür ist die Verwendung eines Rotors mit kleinerem Innendurchmesser, der den Größenunterschied der Magnete ausgleicht. Nachteilig dabei ist aber, dass dafür Neuteile benötigt werden bzw. der Rotor neu dimensioniert werden muss.

Alternativ kann ein Zwischenring verwendet werden, der in die bestehende Rotorglocke eingesetzt wird und in den die hochremanenten Magnete eingesetzt werden. Problematisch ist jedoch, dass sowohl die Rotorglocke, als auch der Zwischenring kleine geometrische Toleranzen aufweisen müssen, um diese prozesssicher fügen zu können. Zudem werden zusätzliche Fertigungsschritte, wie beispielsweise ein Kleben des Zwischenrings an den Rotor, notwendig, wodurch die Taktzeiten negativ beeinflusst werden.

Eine weitere Lösung ist beispielsweise in der EP 2 249 460 offenbart. In dieser Druckschrift ist eine Vorrichtung beschrieben, bei welcher die Magnethaltevorrichtung dazu vorgesehen ist, einen Magneten in einem Schlitz im Rotor zu befestigen. Dabei ist jedoch eine Magnethalterung für die Befestigung der Magneten innerhalb des Rotors angeordnet, wodurch das Magnetfeld der Magneten nachteilig beeinflusst wird.

Weiterer druckschriftlicher Stand der Technik im vorliegenden technischen Gebiet ist in den Dokumenten US 2015/048 620 A1, CA 2 950 308 A1, KR 2018 0089204 A und EP 3 567 701 A1 offenbart.

Es ist daher Aufgabe der vorliegenden Erfindung, eine Magnetelementhaltevorrichtung für einen um eine Rotationsachse rotierbaren Rotor eines Elektromotors bereitzustellen, mittels welcher die für den Rotor üblichen Magneten durch Magneten mit einer kleineren Geometrie ersetzbar sind.

Diese Aufgabe wird durch die Merkmalskombination gemäß Patentanspruch 1 gelöst.

Erfindungsgemäß wird eine Magnetelementhaltevorrichtung nach Anspruch 1 für einen um eine Rotationsachse rotierbaren Rotor eines Elektromotors mit wenigstens einem Magnetträger, welcher mindestens einen Aufnahmeabschnitt zur Aufnahme mindestens eines Magnetelements aufweist, und wenigstens einem Halteelement zum positionsfesten Halten des mindestens einen Magnetelements innerhalb des mindestens einen Aufnahmeabschnitts vorgeschlagen. Der Magnetträger weist eine Außenfläche auf, welche ausgebildet ist, an einer Innenmantelfläche des Rotors angeordnet zu werden. Dabei ist an einer der Außenfläche gegenüberliegenden Innenfläche des Magnetträgers ein Vorsprung ausgebildet. Außerdem sind der Aufnahmeabschnitt und das wenigstens eine Halteelement an einem freien Ende des Vorsprungs ausgebildet.

Vorteilhaft daran ist, dass die hochremanenten Magnete zusammen auf einer Magnetelementhaltevorrichtung vormontierbar sind. Es ist sowohl eine Vormontage der Magneten an der Magnethaltevorrichtung möglich, als auch zuerst eine Montage der Magnethaltevorrichtung an dem Rotor und anschließend der Magnete an der Magnethaltevorrichtung. Die Magnetelementhaltevorrichtung hat zumindest an der Außenfläche eine der ursprünglich vorgesehenen Magneten entsprechende Abmessung. Dadurch kann die Magnetelementhaltevorrichtung mit Magneten einer kleineren Geometrie nach gleicher Weise in den Rotor eingebracht werden wie die ursprünglich vorgesehenen Magneten. Auf diese Weise können die ursprünglich vorgesehenen Magnete durch die kleineren Magnete ersetzt werden, ohne dass andere Komponenten des Motors gewechselt werden müssen und ohne dass neue Fertigungsanlagen und -prozesse notwendig werden. Die Magnethaltevorrichtung hat auf der der Rotorglocke zugewandten Seite eine ähnliche Kontur, wie die ursprünglich vorgesehenen Magnete, so dass diese vergleichbar, wie die Magnete in die Rotorglocke, eingebaut werden kann. Dadurch ergibt sich ein einfache Montage der Baugruppe aus der Magnethaltevorrichtung und dem Magneten mit einer kleineren Geometrie analog zur Fertigung der Standardprodukte mit den ursprünglich vorgesehenen Magneten. Weiter vorteilhaft ist die Nutzung der vorhandenen Komponenten, wie beispielsweise dem Rotor mit dem entsprechenden Lagersystem. Dementsprechend müssen nur die ursprünglich vorgesehenen Magnete ersetzt werden, die anderen Teile des Motors bleiben gleich, insbesondere die Rotorglocke. Aufgrund des entsprechend der zu verwendenden Magnete ausgebildeten Vorsprungs kann der ursprünglich vorgesehene Luftspalt zwischen dem Magnet und dem Stator in einem montierten Zustand beibehalten werden. Der Magnetträger der Magnethaltevorrichtung ermöglicht folglich Magnete auch in einem nicht dafür ausgelegten Rotor zu positionieren, da dieser die Größenunterschiede zwischen den ursprünglichen Magneten und den neuen Magneten ausgleicht. Dadurch ist es möglich Magnete mit verschiedenen Geometrien im gleichen Rotor einzusetzen. Der Magnethalter ist dementsprechend auch wie ein Adapter anzusehen.

Vorzugsweise ist die Magnetelementhaltevorrichtung derart ausgebildet, dass der Magnetträger aus einem magnetisierbaren oder magnetischen Material besteht. Dies hat positive Auswirkungen auf das von den Magneten erzeugte Magnetfeld und optimiert folglich den Elektromotor.

In einer vorteilhaften Ausführungsvariante ist vorgesehen, dass der wenigstens eine Magnetträger und/oder das wenigstens eine Halteelement als ein Blechpaket ausgebildet ist/sind. Dabei besteht das Halteelement aus gestanzten Blechteilen, welche zusammengefügt sind, wobei nicht jedes Blech die gleiche Form haben muss. Beispielsweise sind die seitlichen Halteelemente nicht bei jedem Blech vorgesehen. Es handelt sich dabei um das gleiche Herstellungsverfahren zur Fertigung von Statoren.

In einem Ausführungsbeispiel der Erfindung sind zwei Halteelemente vorgesehen, welche zumindest jeweils gegenüberliegend an axialen Seitenkanten des Vorsprungs ausgebildet sind. Dabei erstreckt sich das jeweilige Halteelement über eine gesamte axiale Erstreckung des Vorsprungs und der Aufnahmeabschnitt ist zwischen den beiden Halteelementen ausgebildet. Dabei ist günstig, dass bei der Positionierung der entsprechenden Magnetelemente ein gewisser Spielraum bereitgestellt ist und diese dadurch in einem entsprechenden Rahmen anpassbar ist.

In einer alternativen Ausführung der vorliegenden Magnetelementhaltevorrichtung ist ferner vorgesehen, dass eine Vielzahl von Paaren zweier Halteelemente ausgebildet ist. Dabei sind die beiden Halteelemente des jeweiligen Paares jeweils gegenüberliegend an axialen Seitenkanten des Vorsprungs ausgebildet. Die Paare zweier Halteelemente sind ferner entlang der axialen Erstreckung des Vorsprungs beabstandet angeordnet, insbesondere gleichmäßig beabstandet angeordnet. Auf diese Weise wird die Streuung des magnetischen Flusses und das Gewicht der Haltevorrichtung reduziert.

Ferner ist eine Ausführung günstig, bei welcher jeweils ein Aufnahmeabschnitt zwischen den beiden Halteelementen des jeweiligen Paares zweier Halteelemente oder zwischen den Halteelementen zweier benachbarter Paare zweier Halteelemente ausgebildet ist. Dadurch ist fest vorgegeben, an welcher Position der Aufnahmeabschnitt des jeweiligen Magnetelements angeordnet ist und somit die Montage vereinfacht.

Weiter vorteilhaft ist es, wenn der Abstand zwischen den Halteelementen der Erstreckung des wenigstens einen Magnetelements entspricht. Dadurch ist der Abstand an die zu verwendenden Magnete angepasst und die Fixierung und Positionierung des entsprechenden Magnets optimiert.

In einer weiteren vorteilhaften Variante ist erfindungsgemäß vorgesehen, dass das wenigstens eine Magnetelement rechteckig oder schalenförmig ausgebildet ist. Diese entsprechende Geometrie ist besonders günstig hinsichtlich der Fixierung und der Ausrichtung des entsprechenden Magnetfelds. In einem Ausführungsbeispiel der Erfindung ist vorgesehen, dass das jeweilige Halteelement stegförmig ausgebildet ist. Ein derartiges Halteelement ist vorteilhaft hinsichtlich der Fixierung des Magnetelements.

Die erfindungsgemäße Magnetelementhaltevorrichtung ist in einer Ausführungsvariante ausgebildet, dass das jeweilige Magnetelement zwischen den entsprechenden Halteelementen des entsprechenden Aufnahmeabschnitts kraftschlüssig fixierbar ist. Vorteilhaft daran ist, dass keine weiteren Befestigungsmaßnahmen für das entsprechende Magnetelement nötig sind. Es sind jedoch auch Ausführungen für Anwendungsfälle möglich, bei welchen das mindestens eine Magnetelement zusätzlich an dem entsprechenden Aufnahmeabschnitt verklebt ist.

In einer weiteren vorteilhaften Variante ist erfindungsgemäß vorgesehen, dass das mindestens eine Halteelement als ein Rasthaken für das jeweilige Magnetelement ausgebildet ist. Auf diese Weise kann das entsprechende Magnetelement mittels der Rasthaken an dem vorgesehenen Aufnahmeabschnitt verrasten, wodurch die Fixierung weiter optimiert ist.

In einem Ausführungsbeispiel der Magnetelementhaltevorrichtung ist vorgesehen, dass der Magnetträger und das mindestens eine Halteelement einstückig ausgebildet sind. Dadurch werden die Bauteilfestigkeit und die Herstellung der Komponenten optimiert.

Erfindungsgemäß ist vorgesehen, dass an einer axialen Seitenfläche des Magnetträgers ein Steg vorgesehen ist, welcher in tangentialer Verlängerung der Außenfläche des Magnetträgers ausgebildet ist, und an einer gegenüberliegenden axialen Seitenfläche des Magnetträgers ein weiterer Steg ausgebildet ist, welcher beabstandet von der Außenfläche verläuft. Auf diese Weise ist die Fixierung der Magnetelementhaltevorrichtung an der Innenmantelfläche des Rotors verbessert, da in einem montierten Zustand der eine Steg eines Magnetträgers mit einem Steg eines benachbart angeordneten Magnetträgers überlappt bzw. überlappend angeordnet ist.

Erfindungsgemäß ist ferner vorgesehen, dass der jeweilige Steg derart ausgebildet ist, dass an einem freien Ende des Stegs ein Federelement angeordnet oder fixiert ist. Das entsprechende Federelement verbessert die Fixierung zwischen benachbart angeordneten Magnetträgern bzw. der Magnetelementhaltevorrichtung. Ferner sind weitere Varianten möglich, bei welchen die Magnetelementhaltevorrichtung außenrandseitig mindestens ein Federelement aufweist, über welches eine Vorspannung gegenüber einer außenrandseitig angrenzend positionierten Magnetelementhaltevorrichtung erzeugbar ist oder das Federelement einteilig an der Magnetelementhaltevorrichtung ausgebildet ist oder sich das Federelement im Wesentlichen über eine gesamte Randseitenlänge der Magnetelementhaltevorrichtung erstreckt. Sämtliche Varianten optimieren die Fixierung der Magnetelementhaltevorrichtung in dem entsprechenden Rotor.

In einer weiteren vorteilhaften Variante ist erfindungsgemäß vorgesehen, dass der wenigstens eine Magnetträger an der Außenfläche wenigstens eine axial verlaufende Nut aufweist. Es sind außerdem Varianten denkbar, bei welchen zwei oder drei Nuten ausgebildet sind, welche beabstandet an der Außenfläche des Magnetträgers angeordnet sind. In einer alternativen Variante weist der wenigstens eine Magnetträger im Bereich der Außenfläche wenigstens einen axial verlaufenden Durchbruch aufweist. Der axial verlaufende Durchbruch bildet dabei eine Lufttasche aus. Die jeweilige Nut oder Lufttasche bzw. der jeweilige axial verlaufende Durchbruch bildet einen Lustspalt aus, welcher die Betriebseigenschaften des Rotors bzw. des Elektromotors optimiert.

In einer bevorzugten Ausführungsform der Erfindung ist das mindestens eine Magnetelement ein Seltenerd-Magnetelement. Vorteilhaft daran ist, dass Seltenerd-Magneten hochremanent sind und folglich die Drehmomentdichte des Elektromotors verbessert ist.

Erfindungsgemäß wird ferner ein Rotor eines Elektromotors nach Anspruch 15 mit einer Vielzahl
von Magnetelementhaltevorrichtungen entsprechend der vorstehenden Offenbarung vorgeschlagen, bei welchem die Vielzahl der Magnetelementhaltevorrichtungen in Umfangsrichtung um die Rotationsachse aneinander angrenzend an einer Innenwand des Rotors angeordnet und miteinander befestigt ist.

Vorteilhaft daran ist, dass die Montage der Baugruppe der Magnetelementhaltevorrichtungen bestehend aus dem Magnetträger und dem entsprechenden Magnetelement optimiert ist und analog zur Fertigung der Standardprodukte mit den ursprünglich genutzten Magneten erfolgen kann. Darüber hinaus ist die Nutzung von vorhanden Komponenten, wie beispielsweise des Rotors mit dem entsprechenden Lagersystem, möglich. Nur die ursprünglich genutzten Magneten werden ersetzt und die anderen Teile des Motors bleiben gleich, insbesondere die Rotorglocke.

Erfindungsgemäß ist vorgesehen, dass der jeweilige Steg eines Magnetträgers mit einem jeweiligen weiteren Steg eines Magnetträgers einer benachbarten Magnetelementhaltevorrichtung überlappend angeordnet ist.

Des Weiteren ist erfindungsgemäß vorgesehen, dass zwischen jeder der Magnetelementhaltevorrichtungen jeweils ein Federelement angeordnet ist, über welches eine Vorspannung gegenüber einer außenrandseitig angrenzend positionierten Magnetelementhaltevorrichtung erzeugbar ist. Auf diese Weise wird die Fixierung der Magnetelementhaltevorrichtung in dem Rotor verbessert.

In einer alternativen Ausführung der vorliegenden Erfindung ist die Vielzahl der Magnetelementhaltevorrichtungen an der Innenwand des Rotors zumindest stellenweise verklebt ist. Außerdem ist eine Ausführung möglich, bei welcher die Vielzahl der Magnetelementhaltevorrichtungen in einer Umfangsrichtung zu einer Kreiseinheit verbindbar und als Ganzes entlang der Innenwand in den Rotor einschiebbar ist.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine Schnittansicht einer Magnetelementhaltevorrichtung, welche nicht der Erfindung entspricht;
- Fig. 2: eine Schnittansicht einer erindungsgemäßen Magnetelementhaltevorrichtung;
- Fig. 3: eine Seitenansicht noch einer weiteren nicht erfindungsgemäßen Magnetelementhaltevorrichtung;
- Fig. 4: eine Schnittansicht eines Rotors eines Elektromotors mit einer Vielzahl von Magnetelementhaltevorrichtungen, welche nicht der Erfindung entsprechen;
- Fig. 5: eine Schnittansicht eines Rotors eines Elektromotors mit einer Vielzahl von erfindungsgemäßen Magnetelementhaltevorrichtungen;
- Fig. 6: eine Schnittansicht eines Rotors eines Elektromotors mit einer Vielzahl von Magnetelementhaltevorrichtungen welche nicht der Erfindung entsprechen mit Lufttaschen.

Die Figuren sind beispielhaft schematisch. Gleiche Bezugszeichen in den Figuren weisen auf gleiche funktionale und/oder strukturelle Merkmale hin.

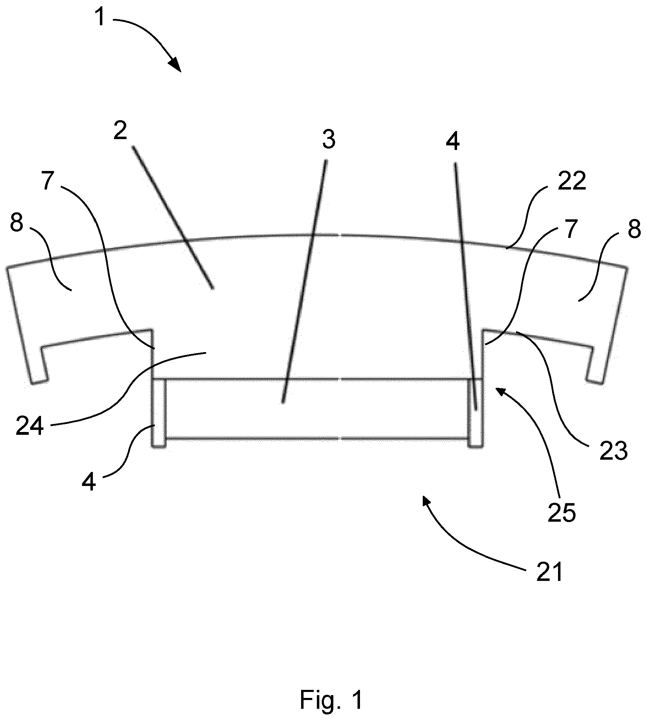

In Figur 1 ist eine Schnittansicht einer nicht erfindungsgemäßen Magnetelementhaltevorrichtung 1 für einen um eine Rotationsachse rotierbaren Rotor 10 eines Elektromotors mit einem Magnetträger 2, welcher einen Aufnahmeabschnitt 21 zur Aufnahme eines Magnetelements 3 aufweist, und zwei Halteelemente 4 zum positionsfesten Halten des einen Magnetelements 3 innerhalb des Aufnahmeabschnitts 21 dargestellt.

Der Magnetträger 2 weist eine Außenfläche 22 auf, welche ausgebildet ist, an einer Innenmantelfläche des Rotors 10 angeordnet zu werden und besteht aus einem magnetisierbaren oder magnetischen Material. An einer der Außenfläche 22 gegenüberliegenden Innenfläche 23 des Magnetträgers 2 ist ein Vorsprung 24 ausgebildet. Ferner sind der Aufnahmeabschnitt 21 und die beiden Halteelemente 4 an einem freien Ende 25 des Vorsprungs 24 ausgebildet.

Die beiden Halteelemente 4 sind jeweils gegenüberliegend an axialen Seitenkanten des Vorsprungs 24 ausgebildet und das jeweilige Halteelement 4 erstreckt sich über eine gesamte axiale Erstreckung des Vorsprungs 24. Zwischen den beiden Halteelementen 4 ist der Aufnahmeabschnitt 21 ausgebildet. Der Abstand zwischen den Halteelementen 4 entspricht dabei der Erstreckung des Magnetelements 3. Außerdem ist das Magnetelement 3 zwischen den beiden Halteelementen 4 des Aufnahmeabschnitts 21 kraftschlüssig fixierbar. Darüber hinaus ist das jeweilige Halteelement 4 als ein Rasthaken für das Magnetelement 3 ausgebildet. Des Weiteren ist das Magnetelement 3 ein Seltenerd-Magnetelement und rechteckig ausgebildet.

An einer jeweiligen axialen Seitenfläche 7 des Magnetträgers 2 ist ein Steg 8 ausgebildet, welcher in tangentialer Verlängerung der Außenfläche des Magnetträgers 2 von dieser hervorsteht.

Nachdem die wesentlichen Merkmale der nachfolgend beschriebenen Magnetelementhaltevorrichtungen 1 der in Figur 1 dargestellten Magnetelementhaltevorrichtung 1 entsprechen, wird lediglich auf unterschiedliche Merkmale eingegangen.

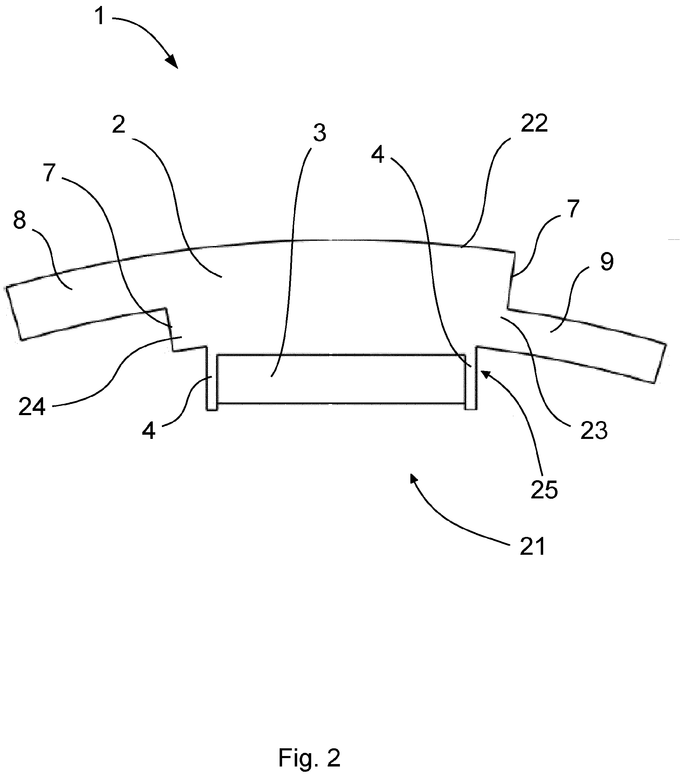

Figur 2 zeigt eine Schnittansicht einer erfindungsgemäßen Magnetelementhaltevorrichtung 1. Bei dieser Ausführung ist eine Vielzahl von Paaren zweier Halteelemente 4 vorgesehen. Die beiden Halteelemente 4 des jeweiligen Paares sind jeweils gegenüberliegend an axialen Seitenkanten des Vorsprungs 24 ausgebildet. Ferner sind die Paare zweier Halteelemente 4 entlang der axialen Erstreckung des Vorsprungs 24 beabstandet angeordnet. Dabei ist jeweils ein Aufnahmeabschnitt 21 zwischen den Halteelementen 4 zweier benachbarter Paare zweier Halteelemente 4 ausgebildet. Der Abstand zwischen den Halteelementen 4 entspricht der Erstreckung des Magnetelements 3.

Außerdem ist das jeweilige Halteelement 4 stegförmig und der Magnetträger 2 und die beiden Halteelemente 4 sind einstückig ausgebildet.

An einer axialen Seitenfläche 7 des Magnetträgers 2 ist ein Steg 8 angeordnet, welcher in tangentialer Verlängerung der Außenfläche des Magnetträgers 2 ausgebildet ist und an einer gegenüberliegenden axialen Seitenfläche 7 des Magnetträgers 2 ist ein weiterer Steg 9 ausgebildet, welcher beabstandet von der Außenfläche verläuft.

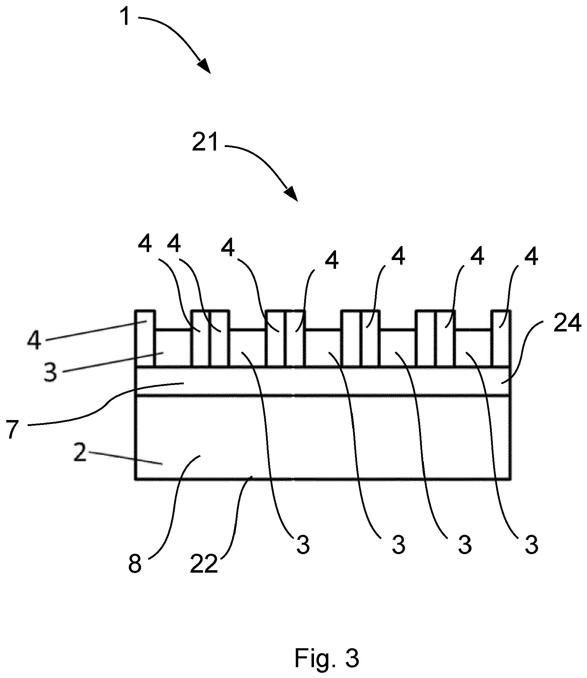

In Figur 3 ist eine Seitenansicht noch einer weiteren nicht erfindungsgemäßen Magnetelementhaltevorrichtung 1 dargestellt. Dabei ist das Halteelement 4 als ein Blechpaket mit einer Vielzahl von Blechen ausgebildet. An einer jeweiligen axialen Seitenfläche 7 des Magnetträgers 2 ist ein Steg 8 ausgebildet, welcher in tangentialer Verlängerung der Außenfläche des Magnetträgers 2 von dieser hervorsteht. Ferner ist der jeweilige Steg 8 derart ausgebildet ist, dass an einem freien Ende des Stegs 8 ein Federelement 11 (nicht dargestellt) fixiert ist.

Bei dieser Ausführung ist eine Vielzahl von Paaren zweier Halteelemente 4 vorgesehen. Die beiden Halteelemente 4 des jeweiligen Paares sind jeweils gegenüberliegend an axialen Seitenkanten des Vorsprungs 24 ausgebildet. Ferner sind abwechselnd die Paare zweier Halteelemente 4 entlang der axialen Erstreckung des Vorsprungs 24 beabstandet und aneinander angrenzend angeordnet. Dabei ist jeweils ein Aufnahmeabschnitt 21 zwischen den Halteelementen 4 zweier beabstandeter und benachbarter Paare zweier Halteelemente 4 ausgebildet. Der Abstand zwischen den Halteelementen 4 entspricht der Erstreckung des wenigstens einen Magnetelements 3.

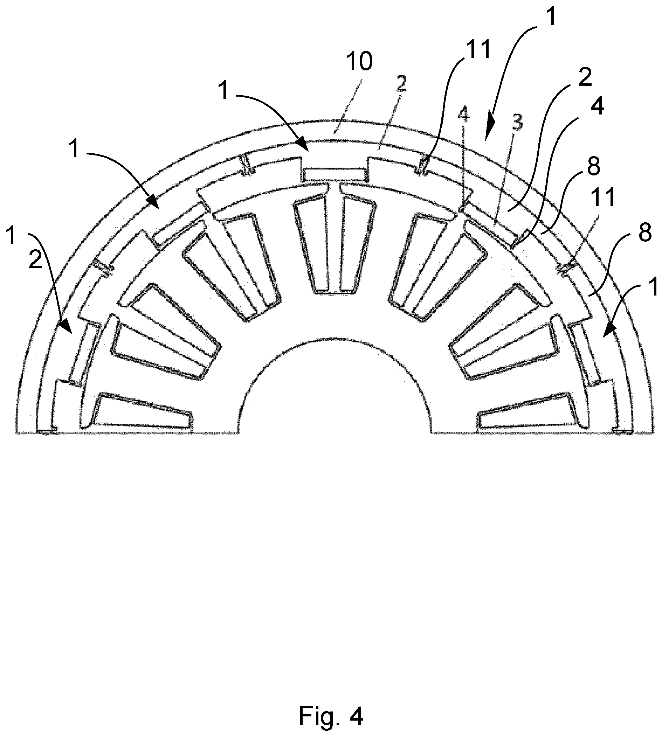

Figur 4 zeigt eine Schnittansicht eines Rotors 10 eines Elektromotors mit einer Vielzahl von nicht erfindungsgemäßen Magnetelementhaltevorrichtungen 1 entsprechend Figur 1.

Die Vielzahl der Magnetelementhaltevorrichtungen 1 ist in Umfangsrichtung um die Rotationsachse aneinander angrenzend an einer Innenwand des Rotors 10 angeordnet und miteinander befestigt ist.

Zwischen jeder der Magnetelementhaltevorrichtungen 1 ist jeweils ein Federelement 11 angeordnet, über welches eine Vorspannung gegenüber einer außenrandseitig angrenzend positionierten Magnetelementhaltevorrichtung 1 erzeugbar ist.

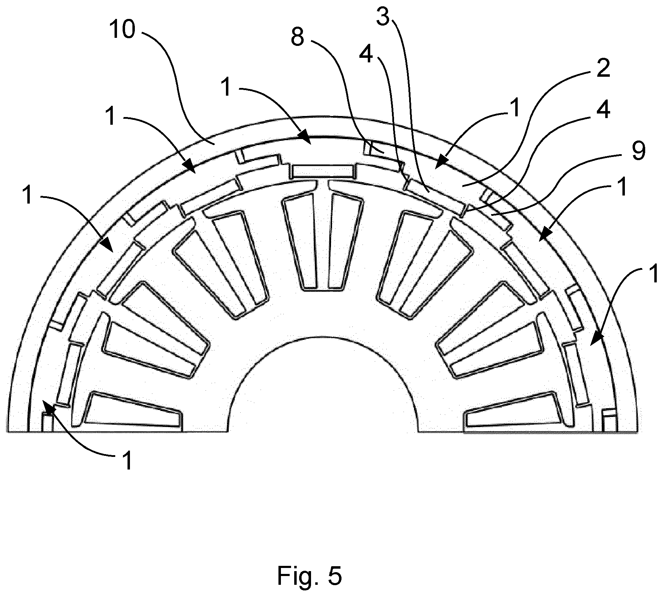

In Figur 5 ist eine Schnittansicht eines Rotors 10 eines Elektromotors mit einer Vielzahl von erfindungsgemäßen Magnetelementhaltevorrichtungen 1 entsprechend Figur 2 dargestellt. Dabei ist der jeweilige Steg 8 mit einem jeweiligen weiteren Steg 9 einer benachbarten weiteren Magnetelementhaltevorrichtung 1 überlappend angeordnet.

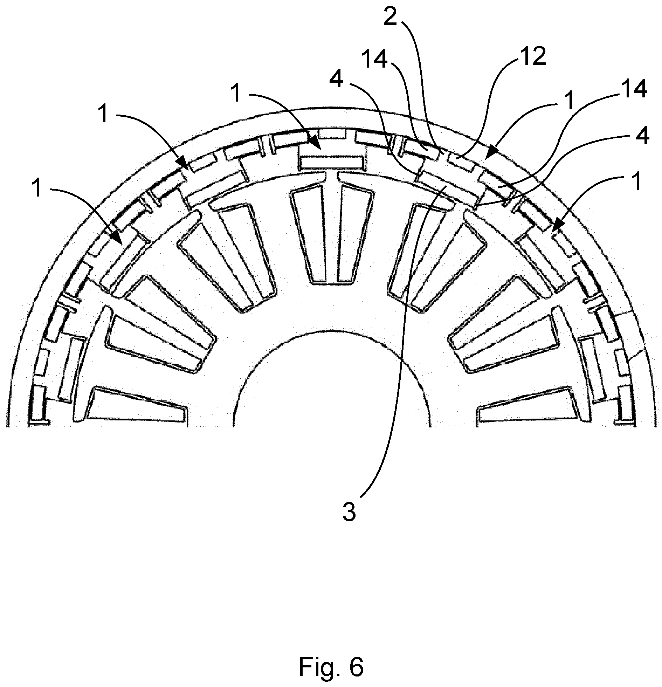

Figur 6 zeigt eine Schnittansicht eines Rotors 10 eines Elektromotors mit einer Vielzahl von nicht erfindungsgemäßen Magnetelementhaltevorrichtungen 1 entsprechend Figur 1 mit dem Unterschied, dass der jeweilige Magnetträger 2 an der Außenfläche ein axial verlaufende Nut 12 und zwei axial verlaufende Durchbrüche 14 aufweist, welche jeweils einen Luftspalt ausbilden.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Magnetelementhaltevorrichtung (1) für einen um eine Rotationsachse rotierbaren Rotor (10) eines Elektromotors mit wenigstens einem Magnetträger (2), welcher mindestens einen Aufnahmeabschnitt (21) zur Aufnahme mindestens eines Magnetelements (3) aufweist, und wenigstens einem Halteelement (4) zum positionsfesten Halten des mindestens einen Magnetelements (3) innerhalb des mindestens einen Aufnahmeabschnitts (21),
wobei der Magnetträger (2) eine Außenfläche (22) aufweist, welche ausgebildet ist, an einer Innenmantelfläche des Rotors (10) angeordnet zu werden,
wobei an einer der Außenfläche (22) gegenüberliegenden Innenfläche (23) des Magnetträgers (2) ein Vorsprung (24) ausgebildet ist,
wobei der Aufnahmeabschnitt (21) und das wenigstens eine Halteelement (4) an einem freien Ende (25) des Vorsprungs (24) ausgebildet sind, **dadurch gekennzeichnet, dass**
an einer axialen Seitenfläche (7) des Magnetträgers (2) ein Steg (8) ausgebildet ist, welcher in tangentialer Verlängerung der Außenfläche des Magnetträgers (2) ausgebildet ist, und an einer gegenüberliegenden axialen Seitenfläche (7) des Magnetträgers (2) ein weiterer Steg (9) ausgebildet ist, welcher beabstandet von der Außenfläche verläuft, wobei in einem montierten Zustand der Steg (8) des Magnetträgers (2) mit einem weiteren Steg (9) eines benachbart angeordneten Magnetträgers (2) überlappt,
wobei der jeweilige Steg (8, 9) derart ausgebildet ist, dass an einem freien Ende des Stegs (8, 9) ein Federelement (11) angeordnet oder fixiert ist.

2. Magnetelementhaltevorrichtung (1) gemäß Anspruch 1, wobei der Magnetträger (2) aus einem magnetisierbaren oder magnetischen Material besteht.

3. Magnetelementhaltevorrichtung (1) gemäß Anspruch 1 oder 2, wobei der wenigstens eine Magnetträger (2) und/oder das wenigstens eine Halteelement (4) als ein Blechpaket ausgebildet ist/sind.

4. Magnetelementhaltevorrichtung (1) gemäß einem der Ansprüche 1 bis 3, wobei zwei Halteelemente (4) vorgesehen sind, welche zumindest jeweils gegenüberliegend an axialen Seitenkanten des Vorsprungs (24) ausgebildet sind, wobei sich das jeweilige Halteelement (4) über eine gesamte axiale Erstreckung des Vorsprungs (24) erstreckt und wobei zwischen den beiden Halteelementen (4) der Aufnahmeabschnitt (21) ausgebildet ist.

5. Magnetelementhaltevorrichtung (1) gemäß einem der Ansprüche 1 bis 3, wobei eine Vielzahl von Paaren zweier Halteelemente (4) vorgesehen ist, wobei die beiden Halteelemente (4) des jeweiligen Paares jeweils gegenüberliegend an axialen Seitenkanten des Vorsprungs (24) ausgebildet sind, wobei die Paare zweier Halteelemente (4) entlang der axialen Erstreckung des Vorsprungs (24) beabstandet angeordnet sind.

6. Magnetelementhaltevorrichtung (1) gemäß Anspruch 5, wobei jeweils ein Aufnahmeabschnitt (21) zwischen den beiden Halteelementen (4) des jeweiligen Paares zweier Halteelemente (4) oder zwischen den Halteelementen (4) zweier benachbarter Paare zweier Halteelemente (4) ausgebildet ist.

7. Magnetelementhaltevorrichtung (1) gemäß einem der Ansprüche 4 bis 6, wobei der Abstand zwischen den Halteelementen (4) der Erstreckung des wenigstens einen Magnetelements (3) entspricht.

8. Magnetelementhaltevorrichtung (1) gemäß einem der vorhergehenden Ansprüche, wobei das wenigstens eine Magnetelement (3) rechteckig oder schalenförmig ausgebildet ist.

9. Magnetelementhaltevorrichtung (1) gemäß einem der vorhergehenden Ansprüche 4 bis 8, wobei das jeweilige Magnetelement (3) zwischen den entsprechenden Halteelementen (4) des entsprechenden Aufnahmeabschnitts (21) kraftschlüssig fixierbar ist.

10. Magnetelementhaltevorrichtung (1) gemäß einem der vorhergehenden Ansprüche, wobei das mindestens eine Halteelement (4) als ein Rasthaken für das jeweilige Magnetelement (3) ausgebildet ist.

11. Magnetelementhaltevorrichtung (1) gemäß einem der vorhergehenden Ansprüche, wobei der Magnetträger (2) und das mindestens eine Halteelement (4) einstückig ausgebildet sind.

12. Magnetelementhaltevorrichtung (1) gemäß einem der vorhergehenden Ansprüche, wobei der wenigstens eine Magnetträger (2) an der Außenfläche wenigstens eine axial verlaufende Nut (12) aufweist.

13. Magnetelementhaltevorrichtung (1) gemäß einem der vorhergehenden Ansprüche, wobei der wenigstens eine Magnetträger (2) im Bereich der Außenfläche wenigstens einen axial verlaufenden Durchbruch (14) aufweist.

14. Magnetelementhaltevorrichtung (1) gemäß einem der vorhergehenden Ansprüche, wobei das mindestens eine Magnetelement (3) ein Seltenerd-Magnetelement ist.

15. Rotor (10) eines Elektromotors mit einer Vielzahl von Magnetelementhaltevorrichtungen (1) nach einem der vorhergehenden Ansprüche, **dadurch gekennzeichnet, dass** die Vielzahl der Magnetelementhaltevorrichtungen (1) in Umfangsrichtung um die Rotationsachse aneinander angrenzend an einer Innenwand des Rotors (10) angeordnet und miteinander befestigt ist.

16. Rotor (10) eines Elektromotors mit einer Vielzahl von Magnetelementhaltevorrichtungen (1) nach Anspruch 15, wobei der jeweilige Steg (8) mit einem jeweiligen weiteren Steg (9) einer benachbarten Magnetelementhaltevorrichtung (1) überlappend angeordnet ist.

17. Rotor nach einem der Ansprüche 15 oder 16, **dadurch gekennzeichnet, dass** zwischen jeder der Magnetelementhaltevorrichtungen (1) jeweils ein Federelement (11) angeordnet ist, über welches eine Vorspannung gegenüber einer außenrandseitig angrenzend positionierten Magnetelementhaltevorrichtung (1) erzeugbar ist.

## Claims

1. A magnet element holding device (1) for a rotor (10) of an electric motor, which rotor is rotatable about an axis of rotation, comprising at least one magnet carrier (2), which has at least one receiving portion (21) for receiving at least one magnet element (3), and at least one holding element (4) for positionally fixed holding of the at least one magnet element (3) within the at least one receiving portion (21),
wherein the magnet carrier (2) has an outer surface (22) which is configured to be arranged on an inner circumferential surface of the rotor (10),
wherein a projection (24) is formed on an inner surface (23) of the magnet carrier (2) opposite the outer surface (22),
wherein the receiving portion (21) and the at least one holding element (4) are formed at a free end (25) of the projection (24), **characterized in that**
a web (8) is formed on an axial side surface (7) of the magnet carrier (2), which web is formed in a tangential extension of the outer surface of the magnet carrier (2), and a further web (9) is formed on an opposite axial side surface (7) of the magnet carrier (2), which further web extends at a distance from the outer surface,
wherein, in a mounted state, the web (8) of the magnet carrier (2) overlaps with a further web (9) of an adjacently arranged magnet carrier (2),
wherein the respective web (8, 9) is formed such that a spring element (11) is arranged or fixed at a free end of the web (8, 9).

2. The magnet element holding device (1) according to claim 1, wherein the magnet carrier (2) consists of a magnetizable or magnetic material.

3. The magnet element holding device (1) according to claim 1 or 2, wherein the at least one magnet carrier (2) and/or the at least one holding element (4) is/are formed as a laminated core.

4. The magnet element holding device (1) according to any one of claims 1 to 3, wherein two holding elements (4) are provided, which are formed at least respectively opposite one another on axial side edges of the projection (24), wherein the respective holding element (4) extends over an entire axial extension of the projection (24), and wherein the receiving portion (21) is formed between the two holding elements (4).

5. The magnet element holding device (1) according to any one of claims 1 to 3, wherein a plurality of pairs of two holding elements (4) is provided, wherein the two holding elements (4) of the respective pair are each formed opposite one another on axial side edges of the projection (24), wherein the pairs of two holding elements (4) are arranged spaced apart along the axial extension of the projection (24).

6. The magnet element holding device (1) according to claim 5, wherein in each case a receiving portion (21) is formed between the two holding elements (4) of the respective pair of two holding elements (4) or between the holding elements (4) of two adjacent pairs of two holding elements (4).

7. The magnet element holding device (1) according to any one of claims 4 to 6, wherein the distance between the holding elements (4) corresponds to the extension of the at least one magnet element (3).

8. The magnet element holding device (1) according to any one of the preceding claims, wherein the at least one magnet element (3) is formed rectangular or shell-shaped.

9. The magnet element holding device (1) according to any one of preceding claims 4 to 8, wherein the respective magnet element (3) is fixable between the corresponding holding elements (4) of the corresponding receiving portion (21) in a force-fitting manner.

10. The magnet element holding device (1) according to any one of the preceding claims, wherein the at least one holding element (4) is formed as a latching hook for the respective magnet element (3).

11. The magnet element holding device (1) according to any one of the preceding claims, wherein the magnet carrier (2) and the at least one holding element (4) are formed in one piece.

12. The magnet element holding device (1) according to any one of the preceding claims, wherein the at least one magnet carrier (2) has at least one axially extending groove (12) on the outer surface.

13. The magnet element holding device (1) according to any one of the preceding claims, wherein the at least one magnet carrier (2) has at least one axially extending through-opening (14) in the region of the outer surface.

14. The magnet element holding device (1) according to any one of the preceding claims, wherein the at least one magnet element (3) is a rare-earth magnet element.

15. A rotor (10) of an electric motor comprising a plurality of magnet element holding devices (1) according to any one of the preceding claims, **characterized in that** the plurality of magnet element holding devices (1) is arranged adjoining one another in the circumferential direction about the axis of rotation on an inner wall of the rotor (10) and is fastened to one another.

16. The rotor (10) of an electric motor comprising a plurality of magnet element holding devices (1) according to claim 15, wherein the respective web (8) is arranged overlapping with a respective further web (9) of an adjacent magnet element holding device (1).

17. The rotor according to claim 15 or 16, **characterized in that** a respective spring element (11) is arranged between each of the magnet element holding devices (1), via which spring element a preload can be generated against a magnet element holding device (1) positioned adjacent on an outer-edge side.

## Revendications

1. Dispositif de retenue d'élément magnétique (1) pour un rotor (10) d'un moteur électrique, apte à tourner autour d'un axe de rotation, comprenant au moins un support d'aimant (2), lequel présente au moins une section de logement (21) pour loger au moins un élément magnétique (3), et au moins un élément de retenue (4) pour retenir de manière fixe en position ledit au moins un élément magnétique (3) à l'intérieur de ladite au moins une section de logement (21),
dans lequel le support d'aimant (2) présente une surface externe (22), laquelle est configurée pour être disposée au niveau d'une surface d'enveloppe interne du rotor (10),
dans lequel, au niveau d'une surface interne (23) du support d'aimant (2) opposée à la surface externe (22), une saillie (24) est formée,
dans lequel la section de logement (21) et ledit au moins un élément de retenue (4) sont formés au niveau d'une extrémité libre (25) de la saillie (24), **caractérisé en ce que**
au niveau d'une surface latérale axiale (7) du support d'aimant (2), une nervure (8) est formée, laquelle est formée dans le prolongement tangentiel de la surface externe du support d'aimant (2), et au niveau d'une surface latérale axiale opposée (7) du support d'aimant (2), une autre nervure (9) est formée, laquelle s'étend à distance de la surface externe, dans lequel, dans un état monté, la nervure (8) du support d'aimant (2) chevauche une autre nervure (9) d'un support d'aimant (2) disposé de manière adjacente,
dans lequel la nervure respective (8, 9) est configurée de telle sorte qu'au niveau d'une extrémité libre de la nervure (8, 9), un élément de ressort (11) soit disposé ou fixé.

2. Dispositif de retenue d'élément magnétique (1) selon la revendication 1, dans lequel le support d'aimant (2) est constitué d'un matériau magnétisable ou magnétique.

3. Dispositif de retenue d'élément magnétique (1) selon la revendication 1 ou 2, dans lequel ledit au moins un support d'aimant (2) et/ou ledit au moins un élément de retenue (4) sont configurés sous la forme d'un paquet de tôles.

4. Dispositif de retenue d'élément magnétique (1) selon l'une des revendications 1 à 3, dans lequel deux éléments de retenue (4) sont prévus, lesquels sont formés au moins respectivement de manière opposée au niveau de bords latéraux axiaux de la saillie (24), dans lequel l'élément de retenue respectif (4) s'étend sur une étendue axiale totale de la saillie (24) et dans lequel la section de logement (21) est formée entre les deux éléments de retenue (4).

5. Dispositif de retenue d'élément magnétique (1) selon l'une des revendications 1 à 3, dans lequel une pluralité de paires de deux éléments de retenue (4) est prévue, dans lequel les deux éléments de retenue (4) de la paire respective sont formés respectivement de manière opposée au niveau de bords latéraux axiaux de la saillie (24), dans lequel les paires de deux éléments de retenue (4) sont disposées de manière espacée le long de l'étendue axiale de la saillie (24).

6. Dispositif de retenue d'élément magnétique (1) selon la revendication 5, dans lequel respectivement une section de logement (21) est formée entre les deux éléments de retenue (4) de la paire respective de deux éléments de retenue (4) ou entre les éléments de retenue (4) de deux paires adjacentes de deux éléments de retenue (4).

7. Dispositif de retenue d'élément magnétique (1) selon l'une des revendications 4 à 6, dans lequel la distance entre les éléments de retenue (4) correspond à l'étendue dudit au moins un élément magnétique (3).

8. Dispositif de retenue d'élément magnétique (1) selon l'une des revendications précédentes, dans lequel ledit au moins un élément magnétique (3) est configuré sous forme rectangulaire ou en forme de coque.

9. Dispositif de retenue d'élément magnétique (1) selon l'une des revendications précédentes 4 à 8, dans lequel l'élément magnétique respectif (3) peut être fixé par liaison de force entre les éléments de retenue (4) correspondants de la section de logement (21) correspondante.

10. Dispositif de retenue d'élément magnétique (1) selon l'une des revendications précédentes, dans lequel ledit au moins un élément de retenue (4) est configuré sous forme de crochet d'encliquetage pour l'élément magnétique respectif (3).

11. Dispositif de retenue d'élément magnétique (1) selon l'une des revendications précédentes, dans lequel le support d'aimant (2) et ledit au moins un élément de retenue (4) sont formés d'un seul tenant.

12. Dispositif de retenue d'élément magnétique (1) selon l'une des revendications précédentes, dans lequel ledit au moins un support d'aimant (2) présente au niveau de la surface externe au moins une rainure s'étendant axialement (12).

13. Dispositif de retenue d'élément magnétique (1) selon l'une des revendications précédentes, dans lequel ledit au moins un support d'aimant (2) présente, dans la zone de la surface externe, au moins une ouverture s'étendant axialement (14).

14. Dispositif de retenue d'élément magnétique (1) selon l'une des revendications précédentes, dans lequel ledit au moins un élément magnétique (3) est un élément magnétique aux terres rares.

15. Rotor (10) d'un moteur électrique comprenant une pluralité de dispositifs de retenue d'élément magnétique (1) selon l'une des revendications précédentes, **caractérisé en ce que** la pluralité de dispositifs de retenue d'élément magnétique (1) est disposée de manière adjacente les uns aux autres dans la direction circonférentielle autour de l'axe de rotation au niveau d'une paroi interne du rotor (10) et est fixée ensemble.

16. Rotor (10) d'un moteur électrique comprenant une pluralité de dispositifs de retenue d'élément magnétique (1) selon la revendication 15, dans lequel la nervure respective (8) est disposée de manière à chevaucher une autre nervure respective (9) d'un dispositif de retenue d'élément magnétique (1) adjacent.

17. Rotor selon l'une des revendications 15 ou 16, **caractérisé en ce qu'**entre chacun des dispositifs de retenue d'élément magnétique (1), respectivement un élément de ressort (11) est disposé, par l'intermédiaire duquel une précontrainte peut être générée par rapport à un dispositif de retenue d'élément magnétique (1) positionné de manière adjacente du côté du bord externe.
